# EUROPÄISCHE PATENTSCHRIFT

(11) **EP 2 678 653 B1**
(45) Veröffentlichungstag und Bekanntmachung des Hinweises auf die Patenterteilung: **08.04.2015**
(21) Anmeldenummer: 12703124.3
(22) Anmeldetag: 10.02.2012
(51) Int. Cl.: G01L 9/00

(54) **KERAMISCHE DRUCKMESSZELLE**
CERAMIC PRESSURE MEASURING CELL
CELLULE CÉRAMIQUE DE MESURE DE PRESSION

(30) Priorität: 25.02.2011 DE 102011004722
(43) Veröffentlichungstag der Anmeldung: 01.01.2014
(73) Patentinhaber: Endress+Hauser GmbH+Co. KG, 79689 Maulburg (DE)
(72) Erfinder: BERLINGER, Andrea, 76532 Baden-Baden (DE); DREWES, Ulfert, 79379 Müllheim (DE); PHILIPPS, Michael, 79539 Lörrach (DE); ROßBERG, Andreas, 79713 Bad Säckingen (DE); SCHMIDT, Elke, 79713 Bad Säckingen (DE)
(74) Vertreter: Andres, Angelika Maria
(86) Internationale Anmeldenummer: PCT/EP2012/052305
(87) Internationale Veröffentlichungsnummer: WO 2012/113660

(56) Entgegenhaltungen:
- WO-A1-99/34185
- US-A- 4 380 041
- H Exner ET AL: "Laser welding of functional and constructional ceramics for Microelectronics", , 24. Oktober 2002 (2002-10-24), XP55025801, Gefunden im Internet: URL:http://www.laser.hs-mittweida.de/3_for schung/50_keramik/9_veroeffentlichungen/La ser_welding_of_functional_and_construction al_ceramics.pdf [gefunden am 2012-04-26] in der Anmeldung erwähnt

## Beschreibung

Die vorliegende Erfindung betrifft eine keramische Druckmesszelle, welche mindestens eine Messmembran und einen Grundkörper aufweist, wobei die Messmembran entlang eines ringförmigen Verlaufs der Fügestelle mit dem Grundkörper verbunden ist. Als Werkstoffe für die Fügestelle sind bisher Glas und Aktivhartlote bekannt. Ein mit einem Glaslot gefügter Drucksensor ist beispielsweise aus DE39420102B bekannt. Eine Übersicht zu den verschiedenen Ansätzen zur Herstellung einer Fügestelle mit Zirkon-Nickel-Titan-Aktivhartlot ist in DE 2009 027 742.0 den noch unveröffentlichten Anmeldungen DE1020106365.9, DE102009046844.7, DE102009054909.9 und den jeweils darin zitierten Dokumenten zum Stand der Technik gegeben. Die genannten Werkstoffe erfüllen grundsätzlich ihren Zweck, die Teile von Druckmesszellen miteinander zu fügen, jedoch ergeben sich aus der Verwendung dieser Materialien Einschränkungen für den Messzellenentwurf.

Eine wesentliche Ursache dafür ist die eingeschränkte Medienbeständigkeit der Fügestelle, woraus für Druckmesszellen der industriellen Prozessmesstechnik folgt, dass die Fügestelle vor dem Messmedium zu schützen ist. Insofern als sich die Fügestelle bei den gewöhnlich zylindrischen Druckmesszellen bis zu deren Mantelfläche erstreckt, ergibt sich der Schutz der Fügestelle aus der gängigen Einbausituation, wobei die Druckmesszelle in einem Sensorgehäuse axial eingespannt ist, wobei die Druckmesszelle mit ihrer Stirnseite einen Dichtring gegen eine ringförmige Anschlagfläche drückt, welche eine Gehäuseöffnung umgibt, durch welche die Messmembran an der Stirnseite der Druckmesszelle mit einem Medium, dessen Druck zu messen ist, beaufschlagbar ist.

Wenngleich die Fügestelle auf diese Weise zuverlässig vor dem Medium geschützt ist, ist damit ein ringförmiger Randbereich der Stirnseite der Druckmesszelle, also der Messmembran, als Auflagefläche für den Dichtring erforderlich, so dass dieser Randbereich durch die Fügestelle unterstützt sein muss. Mit kleiner werdendem Durchmesser nimmt der relative Anteil dieses Randbereichs an der Stirnfläche zu, sodass der für die Druckmessung zur Verfügung stehende auslenkbare Teil der Messmembran mit dem Durchmesser der Druckmesszelle überproportional abnimmt. Dies setzt einer Miniaturisierung der Druckmesszellen Grenzen.

Insoweit als mit der Abnahme des Durchmessers der Druckmesszelle der relative Flächenanteil der Fügestelle gegenüber der auslenkbaren Fläche der Messmembran überproportional zunimmt, gewinnen abweichende thermomechanische Eigenschaften zwischen dem Material der Fügestelle und dem keramischen Werkstoff der Messmembran und des Grundkörpers mit der Miniaturisierung der Druckmesszelle relativ an Bedeutung, was zu Verspannungen und letztlich zu Messfehlern führen kann. Damit steht auch dieser Gesichtspunkt einer Miniaturisierung der Messzellen entgegen.

Schließlich führen Verkleinerungen des Durchmessers der Druckmesszelle bei Druckmesszellen mit kapazitiven Wandlern zu sinkenden Kapazitäten. Dies kann zwar theoretisch durch Verringerung der Abstände zwischen Grundkörper und Messmembran beziehungsweise den am Grundkörper und Messmembran angebrachten Elektroden kompensiert werden, jedoch sind dem enge Grenzen gesetzt, da die Materialstärke der gängigen Aktivhartlotringe, mit denen die Fügestelle zwischen Grundkörper und Messmembran gefertigt wird, einer gewissen Streuung unterliegt und nicht beliebig dünn herstellbar ist.

Die Offenlegungsschrift WO 99/34185 A1 offenbart eine Vakuumdruckmesszelle bei welcher eine Karamische Messmembran mittels eines Laserschweißverfahrens mit einem Grundkörper gefügt ist.

Das US Patent 4,380,041 offenbart einen Drucksensor mit einer Glaslotfügung zwischen Messmembran und Gegenkörper, wobei eine Mediendichtung außerhalb der Fläche der Messmembran erfolgt, so dass die Fügestelle nicht gegenüber einem Medium, dessen Druck zu messen ist, geschützt ist.
Es ist daher die Aufgabe der vorliegenden Erfindung, eine Druckmesszelle bereitzustellen, welche die Nachteile des Stands der Technik überwindet, und insbesondere leichter skalierbar, insbesondere miniaturisierbar ist. Die Aufgabe wird erfindungsgemäß gelöst durch die Druckmesszelle gemäß dem unabhängigen Patentanspruch 1.

Die erfindungsgemäße Druckmesszelle umfasst:
mindestens einen keramischen Messmembrankörper; und
mindestens einen keramischen Grundkörper, wobei der Messmembrankörper entlang einer ringförmigen umlaufenden Fügestelle mit dem Grundkörper verbunden ist,
wobei erfindungsgemäß die Fügestelle als Schweißverbindung zwischen dem Messmembrankörper mit dem Grundkörper gebildet ist, wobei der Messmembrankörper eine druckabhängig verformbare Messmembran aufweist,
wobei der Grundkörper einen ringförmigen Membranträgerkörper umfasst, an welchem der Messmembrankörper mittels der umlaufenden Fügestelle befestigt ist,
wobei die Druckmesszelle einen zentralen Wandlerträgerkörper, welcher zumindest teilweise von dem Membranträgerkörper umgeben ist,
wobei der Wandlerträgerkörper mit dem Membranträgerkörper entlang mindestens einer zweiten Fügestelle verbunden ist, insbesondere druckdicht verbunden, wobei die zweite Fügestelle mittels eines Glaslots, des Aktivhartlots, oder mittels Verschweißen gebildet ist.

In einer Weiterbildung der vorliegenden Erfindung umfassen der Messmembrankörper und / oder der Grundkörper Aluminiumoxid, insbesondere Korund.

In einer Weiterbildung der Erfindung weist eine Stirnfläche des Wandlerträgerkörpers mindestens eine Elektrode auf, welche dem Messmembrankörper zugewandt ist, wobei die Messmembran eine Elektrode aufweist, welchen dem Wandlerträgerkörper zugewandt ist.

In einer Weiterbildung der Erfindung ist die Druckmesszelle erhältlich durch ein Verfahren, welches Laserschweißen umfasst, insbesondere mit einem Verfahren, welches das Vorheizen der Umgebung der Schweißnaht zum Vermindern von Spannungen beim eigentlichen Schweißen umfasst. Das Vorheizen kann insbesondere mit einem CO2-Laser erfolgen, wobei das eigentliche Verschweißen durch einen Nd-YAG-Laser erfolgen kann.

Gemäß einer Weiterbildung der Erfindung kann eine innere Mantelfläche des ringförmigen Membranträgerkörpers eine leitfähige Beschichtung aufweisen, welche zusammen mit einer Elektrode an der dem Membranträgerkörper zugewandten Oberfläche der Messmembran, einen zur Messmembran und zur Mantelfläche hin geschlossenen Faradayschen Käfig bildet.

Gemäß einer Weiterbildung der Erfindung weist die Druckmesszelle eine Auflagefläche für einen Dichtring auf, wobei eine axiale Projektion der Auflagefläche auf eine Ebene, in welcher die Fügestelle zwischen der Messmembran und dem Grundkörper gebildet ist, die Fügestelle umschließt.

Gemäß einer Weiterbildung der Erfindung weist die Druckmesszelle eine Auflagefläche für einen Dichtring in einer ersten Ebene auf, wobei die erste Ebene von einer zweiten Ebene, in welcher eine äußere Stirnfläche der Messmembran verläuft, axial beabstandet ist, und zwar um mindestens einen achtel Durchmesser, insbesondere mindestens einen viertel Durchmesser, vorzugsweise mindestens einen halben Durchmesser und besonders bevorzugt mindestens einen ganzen Durchmesser des Messmembrankörpers.

Gemäß einer Weiterbildung der Erfindung ist die Druckmesszelle eine Absolutdruck-, Relativdruck- oder Differenzdruckmesszelle.

Ein erfindungsgemäßer Drucksensor umfasst eine Druckmesszelle nach einem der vorhergehenden Ansprüche und ein Gehäuse, wobei die Druckmesszelle von dem Gehäuse gehalten ist, und wobei die Druckmesszelle eine Gehäuseöffnung verschließt, durch welche die Druckmesszelle mit einer Umgebung des Gehäuses kommuniziert, wobei zwischen einer die Öffnung umgebenden Dichtfläche des Gehäuses und einer Dichtfläche der Druckmesszelle eine Dichtung eingespannt ist.

Die Erfindung wird nun anhand der in den Zeichnungen dargestellten Beispiele von Druckmesszellen erläutert. Es zeigen:
- Figur 1:: einen Längsschnitt durch ein erstes Beispiel einer Druckmesszelle, welche nicht zur Erfindung gehört;
- Figur 2:: einen Längsschnitt durch ein zweites Beispiel einer Druckmesszelle, welche nicht zur Erfindung gehört;
- Figur 3:: einen Längsschnitt durch ein erstes Ausführungsbeispiel einer erfindungsgemäßen Druckmesszelle;
- Figur 4:: einen Längsschnitt durch ein zweites Ausführungsbeispiel einer erfindungsgemäßen Druckmesszelle;
- Figur 5:: einen Längsschnitt durch ein Ausführungsbeispiel eines erfindungsgemäßen Drucksensors; und
- Figur 6:: einen Längsschnitt durch ein Ausführungsbeispiel einer erfindungsgemäßen Druckmesszelle als Differenzdruckmesszelle.

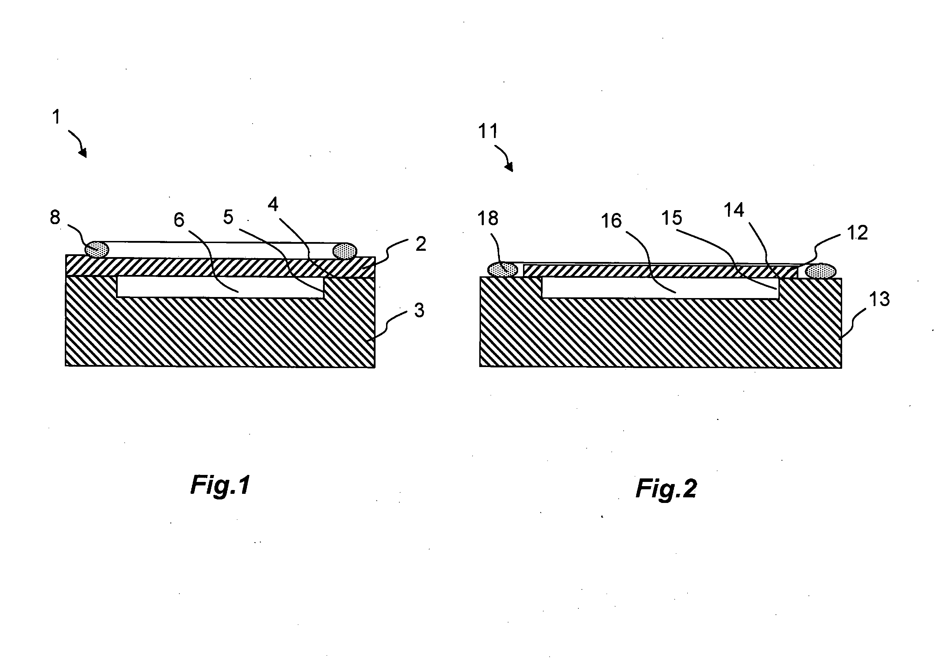

Die in Figur 1 dargestellte Druckmesszelle 1 umfasst eine Messmembran 2 und einen Grundkörper 3, wobei die Messmembran entlang einer umlaufenden Fügestelle druckdicht mit dem Grundkörper durch Laserschweißen verbunden ist. Die Messmembran 2 weist im Wesentlichen eine kreisplattenförmige Gestalt auf mit einem Durchmesser von beispielsweise 1 cm bis 6 cm und dann eine Materialstärke von nicht weniger als 50 µm und nicht mehr als beispielsweise 2500 µm auf. Der Grundkörper 3 weist hier den gleichen Durchmesser auf wie die Messmembran 2, wobei die Materialstärke des Grundkörpers einige Millimeter bis einige Zentimeter beträgt. Vorzugsweise ist der Grundkörper so dimensioniert, dass er bei einer Druckbeaufschlagung der Messmembran 2 allenfalls vernachlässigbare Verformungen erfährt. An einer messmembranseitigen Stirnfläche des Grundkörpers 3 ist eine Aussparung 5 geformt, so dass zwischen der Messmembran 2 und dem Grundkörper 3 eine Druckkammer 6 gebildet ist, in welcher ein Referenzdruck herrscht, gegen den der auf die dem Grundkörper abgewandte Seite der Messmembran wirkende Druck gemessen wird. Bei einem Relativdrucksensor ist dieser Referenzdruck der Atmosphärendruck, der durch einen - hier nicht gezeigten - Kanal in die Druckkammer 6 eingeleitet wird. Bei einem Absolutdrucksensor ist die Druckkammer 6 evakuiert. Die Druckmesszelle 1 kann beispielsweise axial in einem hier nicht dargestellten Gehäuse eingespannt werden, wobei wie bisher üblich auf einer membranseitigen Stirnseite Druckmesszelle ein Dichtring 8 aufliegt, der zwischen der Druckmesszelle und einer eine Gehäuseöffnung umgebenden Dichtfläche eingespannt ist, durch welche die Druckmesszelle mit einem Messmedium beaufschlagbar ist.

Wenngleich die hier dargestellte Messzelle 1 bei flüchtiger Betrachtung Ähnlichkeiten mit den Druckmesszellen nach dem Stand der Technik und der Art der ihrer Montage in einem Sensorgehäuse aufweist, so sind durch die Präparation der Fügestelle 4 mittels Laserschweißen erhebliche Fortschritte erzielt. Die Abstandstoleranzen der herkömmlichen Fügestelle zwischen dem Grundkörper und der Messmembran sind verringert, sodass sich der Abstand dem Grundkörper 3 und der Messmembran 2 nunmehr präziser einstellen und verringern lässt. Weiterhin besteht die Druckmesszelle, abgesehen von ggf. auftretenden Gefügeveränderungen aufgrund des Schweißprozesses im Bereich der Fügestelle 4, im Wesentlichen aus einem weitgehend homogenen Material, so dass die unterschiedlichen thermomechanischen Eigenschaften zwischen den keramischen Werkstoffen von Messmembran und Grundkörper einerseits und den herkömmlichen Materialien der Fügestelle andererseits entfallen. Damit ist bei einer gegebenen Größe der Messzelle der Einfluss von Inhomogenitäten weitgehend eleminiert. Damit ist im Ergebnis eine Verkleinerung des Durchmessers der Messzelle erleichtert, da trotz der relativen Zunahme des Flächenanteils der Fügestelle an der Membranfläche nicht mit einem gesteigerten Maß von Störungen aufgrund von Einflüssen der Fügestelle zu rechnen ist.

Weiterhin weist die Druckmesszelle 1 einen geeigneten Wandler zum Erfassen von druckabhängigen Verformungen der Messmembran auf, der hier jedoch nicht im Einzelnen dargestellt ist. Die Wandlertypen sind kapazitive Wandler, wozu an den die Druckkammer 6 begrenzenden Stirnflächen vom Grundkörper 3 und Messmembran 2 Elektroden vorgesehen sind. Gleichermaßen kann die Druckmesszelle einen weißlichtinterferometrischen Wandler umfassen, wozu die druckkammerseitige Stirnfläche der Messmembran 2 durch eine Bohrung im Grundkörper 3 beleuchtet wird, wozu in die Bohrung ein Lichtleiter eingesetzt ist. Das von der Messmembran reflektierte Licht wird wieder von dem Lichtleiter erfasst. Der Gangunterschied zwischen dem von der Messmembran reflektierten Licht und dem an der Stirnfläche des Lichtleiters reflektierten Licht oder an einem ggf. vorhandenen grundkörperseitigen Fenster reflektierten Licht ist ein Maß für den Abstand zwischen Messmembran und Grundkörper und damit für den an der Messmembran entstehenden Druck. Weiterhin kann ein Widerstandswandler vorgesehen sein, wozu an der Innenseite der Messmembran entsprechende Widerstandselemente zu präparieren sind, insbesondere in Form einer Brückenschaltung.

Die Vertiefung 5 in der Stirnfläche des Grundkörpers 3, deren Maße insbesondere für kapazitive Wandler und für optische Wandler beachtlich sind und ggf. zum Abstützen der Messmembran 2 im Überlastfall eine Rolle spielen, kann beispielsweise zunächst im Grünkörper des Grundkörpers 3 vorgeformt sein und nach dem Brennen in einer Feinbearbeitung, beispielsweise durch Laserablation, Schleifen und / oder Läppen präpariert werden. Weiterhin kann ein Grundkörper mit einer Vertiefung dadurch gebildet werden, dass auf einer ebenen Stirnfläche eines Zylinders ein Ring bzw. Hohlzylinder fixiert wird, beispielsweise durch Laserschweißen.

Das in Figur 2 dargestellte Beispiel einer Druckmesszelle 11 entspricht im Wesentlichen dem Beispiel aus Figur 1, wobei hier eine Messmembran 12 auf einem Grundkörper 13 in der Weise mittels Laserschweißens entlang einer Fügestelle 14 befestigt ist, dass die kreisscheibenförmige Messmembran 12 nicht die gesamte Stirnfläche des zylindrischen Grundkörpers 13 überdeckt, sondern dass ein ringförmiger Bereich der Stirnfläche des Grundkörpers 13 frei bleibt, auf welcher ein elastischer Dichtring 18 zur Anlage kommen kann, wenn die Zelle in einem Sensorgehäuse montiert ist. Wie zuvor weist der Grundkörper in seiner messmembranseitigen Stirnfläche eine Aussparung 15 auf, durch welche eine Druckkammer 16 zwischen der Messmembran und dem Grundkörper 13 gebildet ist. Hinsichtlich der Präparation der Aussparung bzw. Vertiefung und hinsichtlich der Wandler gelten die Ausführung zu Figur 1 entsprechend. Bei dem hier gezeigten Ausführungsbeispiel ist nun die Fügestelle 14 nicht mehr durch den Dichtring 18 geschützt, welcher außerhalb der Messmembran auf einen ringförmigen Bereich der Stirnfläche des Grundkörpers 13 aufliegt. Dies wird dadurch ermöglicht, dass die durch Laserschweißen hergestellte Fügestelle 14 medienbeständig ist, und somit in dem Prozessmedium ausgesetzt werden kann. Insofern, als die Fügestelle 14 nunmehr einen deutlich kleineren Anteil an der Stirnfläche des Grundkörpers 13 beziehungsweise an der Gesamtfläche der Messmembran hat, nimmt die relative Bedeutung von Gefügeveränderungen aufgrund des Schweißprozesses im Vergleich zum Beispiel aus Figur 1 noch weiter ab, sofern diese Gefügeveränderungen überhaupt einen Einfluss haben.

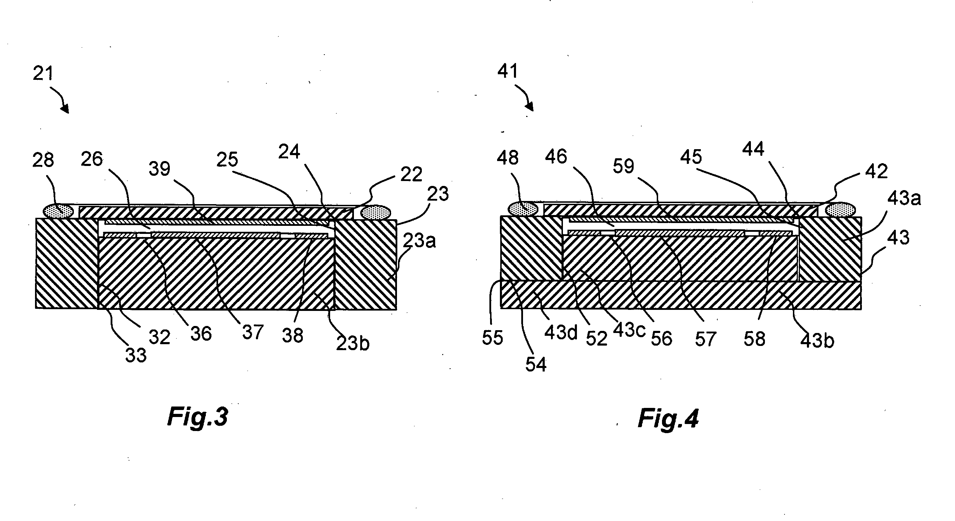

Die in Figuren 3 und 4 gezeigten Ausführungsbeispiele sind Weiterbildungen der Erfindung mit kapazitiven Wandlern, wobei die Druckmesszellen nunmehr zweiteilige Grundkörper aufweisen.

Die erfindungsgemäße Druckmesszelle 21 in Figur 3 weist eine Messmembran 22 und einen zweiteiligen Grundkörper 23 auf, der einen Hohlzylinder 23a und einen Wandlerträgerkörper 23b umfasst. Bei der Herstellung der Druckmesszelle wird zunächst die Messmembran 22 entlang einer Fügestelle 24 mit dem Hohlzylinder 23 A verschweißt. Dann wird eine Elektrode 39 auf der im Grundkörper zugewandten Seite der Messmembran 22 präpariert. Die Elektrode kann beispielsweise eine Tantalschicht oder eine Glasschicht mit eingebetteten leitend vernetzten Metallpartikeln sein. Nach der Präparation der membranseitigen Elektrode 39 wird der Wandlerträgerkörper 23b in den Hohlzylinder 23 A eingesetzt und zumindest an der rückseitigen Stirnfläche des Grundkörpers 23 entlang der Mantelfläche 33 des Wandlerträgerkörpers 23 B mit einer umlaufenden Fügestelle 33 drucktragend und gasdicht verbunden. Die Fügestelle kann insbesondere durch Schweißen präpariert werden, wobei gleichermaßen eine Fügung mit einem Aktivhartlot in einem Hochvakuumlötverfahren oder mittels eines Glaslots erfolgen kann. Die Stirnfläche 36 des Wandlerträgerkörpers 23 B umfasst zwei im Wesentlichen flächengleiche Elektroden, nämlich eine zentrale Elektrode 37, welche von einer ringförmigen Elektrode 38 umgeben ist. Beide Elektroden weisen in der Ruhelage der Messmembran vorzugsweise im Wesentlichen die gleiche Kapazität zur messmembranseitigen Elektrode 39 auf. Diese Dimensionierung der Elektroden ermöglicht eine Beschaltung des kapazitiven Wandlers als Differenzialkondensator.

In einer Variation der Erfindung kann die gesamte innere Mantelfläche des Hohlzylinders 23a metallisiert werden, beispielsweise mit Ta, was insbesondere in einem Schritt mit der Präparation der messmembranseitigen Elektrode 39 in einem Arbeitsgang erfolgen kann, wenn letztere auch eine Ta-Schicht aufweisen soll. Sofern die messmembranseitige Elektrode 39 sich bis zur Mantelfläche des Hohlzylinders erstreckt, und dort die metallische Beschichtung der Mantelfläche des Hohlzylinders umlaufend kontaktiert, bilden messmembranseitige Elektrode und die metallische Beschichtung zusammen einen zur Stirnseite und zur Mantelfläche der Messzelle hin geschlossenen Faraday'schen Käfig, der insbesondere auf Schaltungsmasse einer Messschaltung gelegt sein kann, mit welcher der kapazitive Wandler betrieben werden kann. Diese Variation der Erfindung betrifft nicht nur das Ausführungsbeispiel der Fig. 3, sondern sie ist bei sämtlichen Ausführungen der Erfindung realisierbar, deren Grundkörper einen Hohlzylinder aufweist.

Die axiale Positionierung des Wandlerträgerkörpers 23b in dem Hohlzylinder 23a kann beispielsweise in der Weise erfolgen, dass die Kapazitäten zwischen der zentralen Elektrode 37 und der membranseitigen Elektrode 39 bzw. zwischen der ringförmigen Elektrode 38 und der membranseitigen Elektrode 39 zur Identifizierung einer axialen Sollposition des Wandlerträgerkörpers überwacht werden, und dass der Wandlerträgerkörper 39 in der aufgefundenen Sollposition fixiert wird.

Die hier gezeigte Druckmesszelle ist wiederum gegen einen elastischen Dichtring 28 in einem Sensorgehäuse montierbar.

Das in Figur 4 gezeigte erfindungsgemäße Ausführungsbeispiel entspricht bis auf die Art der axialen Positionierung des Wandlerträgerkörpers bezüglich des Hohlzylinders in dem Ausführungsbeispiel aus Figur 3. Im Einzelnen ist wie bei der Druckmesszelle 41 eine keramische Messmembran 42 mit einem Hohlzylinder 43a eines Grundkörpers 43 entlang einer umlaufenden Fügestelle 44 verschweißt. In die Bohrung 45 des Hohlzylinders 43a ist ein zylindrischer Abschnitt 43c eines Wandlerträgerkörpers 43b eingesetzt, wobei an der der Messmembran abgewandten Basis des zylindrischen Abschnitts 43c eine Basisplatte 43d anschließt, welche einen Außendurchmesser aufweist, der im Wesentlichen mit dem Außendurchmesser des Hohlzylinders 43a übereinstimmt. Eine Mantelfläche 52 des zylindrischen Abschnitts 43c des Wandlerträgerkörpers 43b dient zur lateralen Ausrichtung des Wandlerträgerkörpers 43b bezüglich der Bohrung 45 des Hohlzylinders 43a. Eine dem Hohlzylinder 43a zugewandte Oberseite 54 der Basisplatte 43d dient als axialer Anschlag zur definierten axialen Positionierung des Wandlerträgerkörpers 43b des Hohlzylinders 43a und damit bezüglich der Messmembran 42. Auf einer Stirnfläche 56 des Zylinderkörpers 43c sind wieder eine zentrale Elektrode 57 und eine kapazitätsgleiche ringförmige Elektrode 58 präpariert, die gegenüber einer Elektrode 59 an der Messmembran positioniert sind. Die messmembranseitige Elektrode wird präpariert, nachdem die Messmembran 42 an den Hohlzylinder 43a verschweißt ist und bevor der Wandlerträgerkörper 43b montiert wird. Nach der Positionierung des Wandlerträgerkörpers 43b wird dieser entlang einer umlaufenden Fügestelle 55 an der Basis der Mantelfläche des Hohlzylinders 43a fixiert, was durch Schweißen oder durch Fügen mittels eines Aktivhartlots oder Glaslot erfolgen kann.

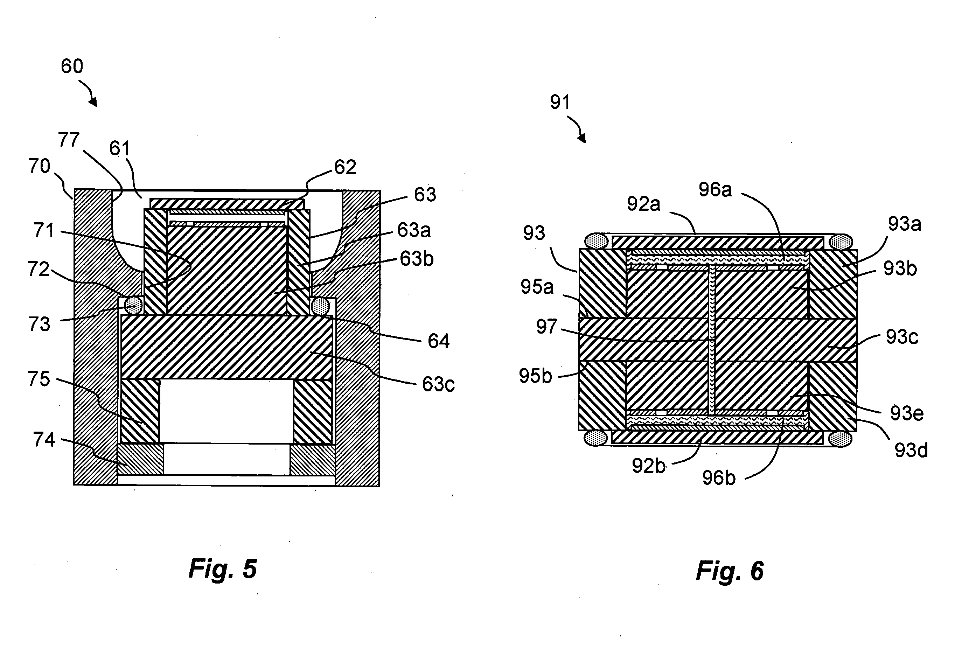

Der in Fig. 5 gezeigte, erfindungsgemäße Drucksensor 60 umfasst eine Druckmesszelle 61, welche eine Messmembran 62 aufweist, die mit einem Grundkörper 63 verschweißt ist. Der Grundkörper umfasst mehrere Komponenten, nämlich einen Hohlzylinder 63a und einen zylindrischen Wandlerträgerkörper 63b, der an seiner Basis eine Basisplatte 63c aufweist. Die Basisplatte 63c steht radial über den Hohlzylinder hervor und ist entlang einer umlaufenden Schweißnaht an der Basis der Mantelfläche des Hohlzylinders 63a druckdicht mit dem Hohlzylinder 63a verschweißt. Ein den Hohlzylinder 63a ringförmig umgebender Randbereich der oberen Stirnfläche der Basisplatte 63c dient als Dichtfläche 64 für die Montage der Druckmesszelle 61 in einem insbesondere metallischen Sensorgehäuse 70.

Das Sensorgehäuse 70 weist eine Öffnung 71 auf, durch welche die Druckmesszelle 61 mit einem Raum außerhalb des Gehäuses 70 kommuniziert. Die Öffnung 71 ist von einer sich radial einwärts erstreckenden Schulter umgeben, welche zu einem Innenraum des Gehäuses 70 hin eine axiale Anschlagfläche 72 bildet. Zwischen der axialen Anschlagfläche 72 und der Dichtfläche 64 ist ein elastischer Dichtring 73 positioniert, gegen den die Messzelle 61 mittels eines Schraubrings 74 axial eingespannt ist, wobei der Schraubring 74 in ein Gewinde in einem Wandabschnitt des Gehäuses 70 eingreift. Zwischen dem Schraubring 74 und der Druckmesszelle ist ein ringförmiger Entkopplungskörper 75 angeordnet, welcher vorzugsweise den gleichen keramischen Werkstoff wie die Druckmesszelle aufweist, insbesondere Korund, um mechanische Spannungen aufgrund von Wärmeausdehnungsunterschieden zwischen den Materialien der Druckmesszelle einerseits und des Schraubrings andererseits, von der Druckmesszelle fernzuhalten.

Durch den axialen Abstand zwischen der Ebene der Frontseite Messmembran 62 und der Ebene der Dichtfläche 64 sind die Auswirkungen von Einspannungskräften auf die Messmembran erheblich reduziert.

Das Gehäuse 70 weist einen ringförmigen axialen Vorsprung 77 auf, der an die Gehäuseöffnung anschließt, um die Druckmesszelle 61 zu schützen.

Fig. 6 zeigt schließlich eine erfindungsgemäße Druckmesszelle 91 auf, die als Differenzdruckmesszelle nach dem Einkammerprinzip gestaltet ist. Hierbei trägt ein keramischer, zylindrischer Grundkörper 93 an beiden Stirnseiten jeweils eine keramische Messmembran 92a, 92b, die mit dem Grundkörper verschweißt ist. Der Grundkörper umfasst zwei Hohlzylinder 93a, 93d, in die jeweils ein zylindrischer Abschnitt 93b, 93e eines zentralen Wandlerträgekörpers eingesetzt ist. Der Wandlerträgerkörper umfasst weiterhin eine Basisplatte 93c, mit welcher die zylindrischen Abschnitte 93b, 93e fest verbunden sind. Der Durchmesser der Basisplatte 93c ist gleich dem Außendurchmesser der Hohlzylinder 93a, 93d. Die Hohlzylinder setzen mit ihrer Basis auf einem ringförmigen Randbereich 95a, 95b der beiden Stirnflächen der Basisplatte 93c auf, wodurch die axialen Positionen der Messmembranen 92a, 92b bezüglich des Wandlerträgerkörpers definiert sind. Die Hohlzylinder 93a und 93d sind jeweils an der Basis ihrer Mantelfläche entlang einer umlaufenden Schweißnaht druckdicht mit der Basisplatte 93c verschweißt.

Zwischen den Messmembranen 92a und 92b und dem Grundkörper 93 ist jeweils eine Druckkammer 96a, 96b gebildet, wobei die Druckkammern hierüber einen Kanal 97 miteinander kommunizieren, der sich als axiale Bohrung durch den Grundkörper erstreckt. Die Druckkammern 96a, 96b und der Kanal 97 sind mit einer Übertragungsflüssigkeit gefüllt, um die beiden Messmembranen hydraulisch zu koppeln. In Fig. 6 ist die Differenzdruckmesszelle mit einem derzeit bevorzugten kapazitiven Wandler dargestellt. Selbstverständlich können aber auch hier andere Wandlerprinzipien zur Anwendung kommen.

Die Beschaltung und Kontaktierung die Elektroden über elektrische Durchführungen sind einem Fachmann für keramische Druckmesszellen bekannt und brauchen daher hier nicht im Detail vertieft zu werden.

Einzelheiten zum Schweißen von keramischen Materialien sind beispielsweise Veröffentlichungen von Exner et al. vom Laserinstitut Mittelsachsen e.V. in Mittweida zu entnehmen, insbesondere: "Laserwelding of functional and constructional ceramics for Microelectronics."

## Patentansprüche

1. Druckmesszelle (21; 41; 61; 91), umfassend:
mindestens einen keramischen Messmembrankörper (22; 42; 62; 92), wobei der Messmembrankörper (22; 42; 62; 92) eine druckabhängig verformbare Messmembran aufweist; und
mindestens einen keramischen Grundkörper (23; 43; 63; 93), wobei der Messmembrankörper (22; 42; 62; 92) entlang einer ringförmigen umlaufenden Fügestelle mit dem Grundkörper (23; 43; 63; 93) verbunden ist, die Fügestelle als Schweißverbindung zwischen dem Messmembrankörper (22; 42; 62; 92) und dem Grundkörper (23; 43; 63; 93) gebildet ist,
wobei der Grundkörper (23; 43; 63; 93) einen ringförmigen Membranträgerkörper (23a; 43a; 63a; 93a; 93d) umfasst, an welchen der Messmembrankörper (22; 42; 62; 92a; 92b) mittels der umlaufenden Fügestelle befestigt ist,
wobei die Druckmesszelle weiterhin einen zentralen Wandlerträgerkörper (23b; 43b; 63b; 93b; 93e) umfasst, welcher zumindest teilweise von dem Membranträgerkörper (23a; 43a; 63a; 93a; 93d) umgeben ist, **dadurch gekennzeichnet, dass**
der Wandlerträgerkörper mit dem Membranträgerkörper (23a; 43a; 63a; 93a; 93d) entlang mindestens einer zweiten Fügestelle verbunden, insbesondere druckdicht verbunden ist, wobei die zweite Fügestelle mittels eines Glaslots oder eines Aktivhartlots, oder mittels Verschweißen gebildet ist.

2. Druckmesszelle nach Anspruch 1, wobei der Messmembrankörper (22; 42; 62; 92) und / oder der Grundkörper (23; 43; 63; 93) Aluminiumoxid (Al₂O₃) umfassen.

3. Druckmesszelle (21; 41; 61; 91) nach Anspruch 1 oder 2, wobei eine Stirnfläche des Wandlerträgerkörpers (23b; 43b; 63b; 93b; 93e) mindestens eine Elektrode aufweist, welche dem Messmembrankörper zugewandt ist, wobei der Messmembrankörper eine Elektrode aufweist, welche dem Wandlerträgerkörper (23b; 43b; 63b; 93b; 93e) zugewandt ist.

4. Druckmesszelle nach einem der Ansprüche 1 bis 3, wobei eine innere Mantelfläche des Membranträgerkörpers eine leitfähige Beschichtung aufweist, welche zusammen mit einer Elektrode an der dem Membranträgerkörper zugewandten Oberfläche der Messmembran einen zur Messmembran und zur Mantelfläche hin geschlossenen Faradayschen Käfig bildet.

5. Druckmesszelle nach einem der vorhergehenden Ansprüche, wobei die Druckmesszelle eine Auflagefläche für einen Dichtring aufweist, wobei eine axiale Projektion der Auflagefläche auf eine Ebene, in welcher die Fügestelle zwischen der Messmembran und dem Grundkörper gebildet ist, die Fügestelle umschließt.

6. Druckmesszelle nach einem der vorhergehenden Ansprüche, wobei die Druckmesszelle eine Auflagefläche für einen Dichtring in einer ersten Ebene aufweist, wobei die erste Ebene von einer zweiten Ebene, in welcher eine äußere Stirnfläche der Messmembran verläuft axial um mindestens einen achtel Durchmesser, insbesondere mindestens einen viertel Durchmesser, vorzugsweise mindestens einen halben Durchmesser und besonders bevorzugt mindestens einen ganzen Durchmesser des Messmembrankörpers beabstandet ist.

7. Druckmesszelle nach einem der vorhergehenden Ansprüche, wobei die Druckmesszelle eine Absolutdruck-, Relativdruck- oder Differenzdruckmesszelle ist.

8. Drucksensor (60), umfassend eine Druckmesszelle (61) nach einem der vorhergehenden Ansprüche und ein Gehäuse (70), wobei die Druckmesszelle (61) von dem Gehäuse (70) gehalten ist, und wobei die Druckmesszelle (61) eine Öffnung (71) des Gehäuses (70) verschließt, durch welche die Druckmesszelle mit einer Umgebung des Gehäuses (70) kommuniziert, wobei zwischen einer die Öffnung (71) umgebenden Dichtfläche (72) des Gehäuses (70) und einer Dichtfläche (64) der Druckmesszelle (61) eine Dichtung (73) eingespannt ist.

## Claims

1. Pressure measuring cell (21, 41, 61, 91), comprising:
at least one ceramic measuring membrane body (22, 42, 62, 92), wherein the measuring membrane body (22, 42, 62, 92) has a measuring membrane that can be deformed depending on the pressure, and
at least one ceramic meter body (23, 43, 63, 93), wherein the measuring membrane body (22, 42, 62, 92) is connected to the meter body (23, 43, 63, 93) along an annular circumferential joint, wherein the joint is formed as a welded connection between the measuring membrane body (22, 42, 62, 92) and the meter body (23, 43, 63, 93),
wherein the meter body (23, 43, 63, 93) comprises a annular membrane carrier body (23a, 43a, 63a, 93a, 93d) on which the measuring membrane body (22, 42, 62, 92a, 92b) is fixed by means of the circumferential joint,
wherein the pressure measuring cell further comprises a central converter carrier body (23b, 43b, 63b, 93b, 93e), which is at least partially surrounded by the membrane carrier body (23a, 43a, 63a, 93a, 93d),
**characterized in that** the converter carrier body is connected to the membrane carrier body (23a, 43a, 63a, 93a, 93d) along at least a second joint, particularly in a pressure-tight manner, wherein the second joint is formed by means of a glass solder or active brazing alloy, or by means of welding.

2. Pressure measuring cell as claimed in Claim 1, wherein the measuring membrane body (22, 42, 62, 92) and/or the meter body (23, 43, 63, 93) comprise aluminum oxide.

3. Pressure measuring cell (21, 41, 61, 91) as claimed in Claim 1 or 2, where an end face of the converter carrier body (23b, 43b, 63b, 93b, 93e) has at least one electrode, which faces towards the measuring membrane body, wherein the measuring membrane body has an electrode which faces towards the converter carrier body (23b, 43b, 63b, 93b, 93e).

4. Pressure measuring cell as claimed in one of the Claims 1 to 3, wherein an inner shell surface of the membrane carrier body has a conductive coating which, together with an electrode on the surface of the measuring membrane facing toward the membrane carrier body, forms a Faraday cage closed toward the measuring membrane and the shell surface.

5. Pressure measuring cell as claimed in one of the previous claims, wherein the pressure measuring cell has a bearing surface for a sealing ring, wherein an axial projection of the bearing surface onto an plane, in which the joint between the measuring membrane and the meter body is formed, surrounds the joint.

6. Pressure measuring cell as claimed in one of the previous claims, wherein the pressure measuring cell has a bearing surface for a sealing ring in a first plane, wherein the first plane is spaced away from the second plane, in which an outer end face of the measuring membrane extends axially, by at least an eighth of the diameter, particularly by at least a quarter of the diameter, preferably by at least a half of the diameter and most preferably by at least a whole diameter of the measuring membrane body.

7. Pressure measuring cell as claimed in one of the previous claims, wherein the pressure measuring cell is an absolute pressure measuring cell, a gauge pressure measuring cell, or a differential pressure measuring cell.

8. Pressure sensor (60) comprising a pressure measuring cell (61) as claimed in one of the previous claims and a housing (70), wherein the pressure measuring cell (61) is held by the housing (70), and wherein the pressure measuring cell (61) seals an opening (71) of the housing (70) through which the pressure measuring cell communicates with an environment of the housing (70), wherein a seal (73) is clamped between a sealing surface (72) of the housing (70) surrounding the opening (71) and a sealing surface (64) of the pressure measuring cell (61).

## Revendications

1. Cellule de mesure de pression (21,41,61, 91), comprenant :
au moins un corps de membrane de mesure (22, 42, 62, 92) en céramique, le corps de membrane de mesure (22, 42, 62, 92) en céramique comportant une membrane de mesure déformable en fonction de la pression, et
au moins un corps de base (23, 43, 63, 93) en céramique, le corps de membrane de mesure (22, 42, 62, 92) étant relié avec le corps de base (23, 43, 63, 93) le long d'une zone de jonction annulaire périphérique, la zone de jonction étant réalisée sous la forme d'une liaison soudée entre le corps de membrane de mesure (22, 42, 62, 92) et le corps de base (23, 43, 63, 93),
pour lequel le corps de base (23, 43, 63, 93) comprend un corps support de membrane (23a, 43a, 63a, 93a, 93d) annulaire, sur lequel est fixé le corps de membrane de mesure (22, 42, 62, 92a, 92b) au moyen de la zone de jonction périphérique,
pour lequel la cellule de mesure de pression comprend en outre un corps support de convertisseur (23b, 43b, 63b, 93b, 93e) central, lequel est entouré au moins partiellement du corps support de membrane (23a, 43a, 63a, 93a, 93d),
**caractérisée en ce que** le corps support de convertisseur est relié avec le corps support de membrane (23a, 43a, 63a, 93a, 93d) le long d'au moins une deuxième zone de jonction, notamment de façon étanche à la pression, la deuxième zone de jonction étant réalisée au moyen d'un brasage au verre ou d'un brasage actif, ou au moyen d'un soudage.

2. Cellule de mesure de pression selon la revendication 1, pour laquelle le corps de membrane de mesure (22, 42, 62, 92) et/ou le corps de base (23, 43, 63, 93) comportent de l'oxyde d'aluminium.

3. Cellule de mesure de pression (21, 41, 61, 91) selon la revendication 1 ou 2, pour laquelle une face frontale du corps support de convertisseur (23b, 43b, 63b, 93b, 93e) présente au moins une électrode, laquelle fait face au corps de membrane de mesure, le corps de membrane de mesure présentant une électrode faisant face au corps support de convertisseur (23b, 43b, 63b, 93b, 93e).

4. Cellule de mesure de pression selon l'une des revendications 1 à 3, pour laquelle une surface latérale intérieure du corps support de membrane présente un revêtement conducteur, lequel forme conjointement avec une électrode sur la surface faisant face au corps support de membrane une cage de Faraday fermée en direction de la membrane de mesure et de la surface latérale.

5. Cellule de mesure de pression selon l'une des revendications précédentes, pour laquelle la cellule de mesure de pression présente une surface d'appui pour une bague d'étanchéité, une projection axiale de la surface d'appui entourant la zone de jonction dans un plan, dans lequel est réalisée la zone de jonction entre la membrane de mesure et le corps de base.

6. Cellule de mesure de pression selon l'une des revendications précédentes, pour laquelle la cellule de mesure de pression présente une surface d'appui pour une bague d'étanchéité dans un premier plan, le premier plan étant distant d'un deuxième plan, dans lequel s'étend axialement une face frontale extérieure de la membrane de mesure, d'au moins un huitième de diamètre, notamment d'au moins un quart de diamètre, de préférence d'au moins un demi-diamètre et particulièrement de préférence d'au moins un diamètre entier du corps de membrane de mesure.

7. Cellule de mesure de pression selon l'une des revendications précédentes, pour laquelle la cellule de mesure de pression est une cellule de mesure de pression absolue, de pression relative ou de pression différentielle.

8. Capteur de pression (60) comprenant une cellule de mesure de pression (61) selon l'une des revendications précédentes et un boîtier (70), la cellule de mesure de pression (61) étant maintenue par le boîtier (70), et la cellule de mesure de pression (61) fermant une ouverture (71) du boîtier (70), à travers laquelle la cellule de mesure de pression communique avec un environnement du boîtier (70), un joint (73) étant serré entre une surface d'étanchéité (72) du boîtier (70) entourant l'ouverture (71) et une surface d'étanchéité (64) de la cellule de mesure de pression (61).
